# EUROPEAN PATENT APPLICATION

(11) **EP 2 492 532 A1**
(43) Date of publication of application: **29.08.2012**
(21) Application number: 10825021.8
(22) Date of filing: 21.10.2010
(51) Int. Cl.: F16D 65/12, B62L 1/00

(54) **BRAKE DISC HAVING REDUCED NOISE**

(30) Priority: 21.10.2009 JP 2009242607
(71) Applicant: Sunstar Engineering Inc., Osaka 569-1195 (JP)
(72) Inventor: NAKATSUJI, Tsuyoshi, Takatsuki-shi Osaka 569-1195 (JP); METSUGI, Fumihiko, Takatsuki-shi Osaka 569-1195 (JP); SHINAGAWA, Yoshinori, Takatsuki-shi Osaka 569-1195 (JP); KANETSUNA, Masaru, Takatsuki-shi Osaka 569-1195 (JP); KUBOTA, Satoshi, Takatsuki-shi Osaka 569-1195 (JP); QUEK, Kwang Peng, 117684 (SG)
(74) Representative: Vossius & Partner
(86) International application number: PCT/JP2010/068605
(87) International publication number: WO 2011/049172

(57) **Abstract**

A brake disc having reduced noise, configured in such a manner that the generation of noise, such as brake noise, in braking operation is effectively prevented using a simple structure. A brake disc (20) for two-wheeled motor vehicle, provided with a mounting section (12) which is mounted to a wheel, a slide section (11) which slides against a brake pad, a connection section (13) which connects the mounting section (12) and the slide section (11), and weight reducing holes (16) for weight reduction. A slit (21) is formed in the slide section (11). The ratio (L/W) of the length (L) of the slit (21) in the radial direction to the width (W) of the slide section (11) is set in the range of 50-95%, and preferably in the range of 60-90%. The width of the slit (21) is set to 2 mm or less.

## Description

### Technical Field

The present invention relates to a brake disc having reduced noise which can effectively reduce or prevent noise such as brake noise during braking.

### Background Art

In general, as a brake disc for a two-wheeled motor vehicle, there has been widely adopted a brake disc which is provided with a mounting section which is to be mounted to a wheel, a slide section which makes sliding contact with a brake pad, a connection section which connects the mounting section and the slide section, a figurate hole for weight reduction which is formed between the mounting section and the slide section, and a plurality of small holes for heat release and weight reduction which are formed in the slide section, and is formed by press molding a metal plate.

In the meantime, since a brake disc for a two-wheeled motor vehicle is necessarily exposed to the outside, sufficient consideration is given not only to the braking performance but also to the design of the brake disc at the time of designing it. As for the design, the shape of the figurate hole, and the shape and the arrangement of the small holes which are to be formed in the slide section are important design matters. Further, the designed brake disc is going to be mass-produced after going through various performance tests. However, there is such a case where the brake disc is forced to change its design due to generation of noise such as brake noise, as a result of a performance test using a practical vehicle.

Although the mechanism of generation of noise such as brake noise has not yet been sufficiently clarified, it is known that when generation of noise is confirmed in the designed brake disc, the noise can be removed by changing the configuration of the brake pad, the design of the figurate holes, or the thickness of the brake disc.

On the other hand, as a brake disc for a car, there has also been proposed a brake disc which is configured in such a manner that at least one groove-like recess is formed in a slide section which makes sliding contact with a brake pad, thereby making it possible to prevent generation of noise during braking (See Patent Document 1, for example).

### Citation List

### Patent Literature

Patent Document 1: JP-A No. 2002-295549

### Summary of Invention

### Technical Problem

In the meantime, when changing the configuration such as the constituent material and the shape of the brake pad for preventing generation of noise during braking in a two-wheeled motor vehicle, namely, when it is necessary to change the configuration of the component other than the brake disc, there is a problem in that it takes long time for the modification in a case where a manufacturer of the brake disc is different from a manufacturer of the brake pad.

Further, when changing the design of the figurate hole or the thickness of the brake disc, a manufacturer of the brake disc can carry out the modification independently. However, when changing the design of the figurate hole, since the change of the design of the figurate hole results in the change of the design of the entire brake disc, there is a problem in that it takes long time to achieve coordination between the manufacturer of the brake disc and a manufacturer of the two-wheeled motor vehicle. On the other hand, when adjusting the thickness of the brake disc, there is a problem in that the adjustment range is significantly restricted due to a demand from a brake system and the generation of noise cannot, therefore, be avoided.

It is an object of the present invention to provide a brake disc having reduced noise which can effectively prevent generation of noise such as brake noise during braking with a simple configuration.

### Solution to Problem

A brake disc having reduced noise for a two-wheeled motor vehicle according to the present invention is provided with a mounting section to be mounted to a wheel, a slide section for making sliding contact with a brake pad, a connection section for connecting the mounting section and the slide section, and a plurality of weight reduction holes for weight reduction, wherein a slit is formed on the slide section. In this regard, in this specification, the slide section indicates a region between an outer circumferential edge of the brake disc and outer circumferential edges of figurate holes. Namely, the slide section includes a region on which a brake pad actually slides and regions adjacent to the brake pad sliding region at the inner circumferential side and the outer circumferential side.

In this brake disc, it is possible to effectively prevent generation of noise such as brake noise during braking by blocking or damping vibrations of the brake disc by means of the slit with a simple configuration in which the slit is formed in the slide section. The slit can be composed of an elongated gap (narrow slit) which penetrates the slide section in the thickness direction. Although the slit can be formed by wire-saw, water jet, or laser processing, the slit is preferably formed by press molding in view of the productivity. Further, the slit is formed so as to have a length with respect to the radial direction of the brake disc in order to block or damp vibrations of the brake disc in the circumferential direction during braking.

The ratio L/W of the length L of the slit in the radial direction of the brake disc to the width W of the slide section is set in the range of 50 to 95%, and preferably in the range of 60 to 90%. When the ratio L/W becomes large, the mechanical strength of the brake disc is decreased. Therefore, the ratio L/W is set to 95% or less, and preferably 90% or less. On the other hand, when the ratio L/W becomes small, a sufficient noise reducing effect cannot be obtained. Therefore, the ratio L/W is set to 50% or more, and preferably 60% or more.

It is also a preferred embodiment that the width of the slit is set to 2 mm or less. In a case where the width of the slit is too wide, the appearance of the brake disc is deteriorated. Therefore, the width is set to 2 mm or less.

It is also a preferred embodiment that a part of the slit at an outer circumferential side of the brake disc in the radial direction is inclined toward a rear side in a rotational direction of the brake disc. With such a configuration, it is possible to prevent the brake pad from getting stuck with an end edge of the slit when the brake pad slidingly contacts the slide section.

It is also a preferred embodiment that an end portion of the slit at an inner circumferential side of the brake disc is connected to one of the weight reduction holes formed at a more inner side of the brake disc than the slide section. With such a configuration, it is possible to facilitate deformation of the brake disc during braking to thereby effectively prevent brake noise.

It is also a preferred embodiment that an end portion of the slit at the outer circumferential side of the brake disc is connected to one of the weight reduction holes formed in the slide section. A crack is likely to be formed in end portions of the slit due to stress concentration. The occurrence of stress concentration at the end portion of the slit at the outer circumferential side can be prevented by connecting the end portion of the slit at the outer circumferential side to the weight reduction hole composed of a round hole and the like as in the present invention, thereby making it possible to reliably prevent the brake disc from being damaged due to a crack formed in the end portion of the slit at the outer circumferential side. In addition, since the occurrence of stress concentration can be prevented by means of the effective utilization of the weight reduction hole, it is possible to reduce a processing cost compared to a case where a small hole is formed on the end portion of the slit separately.

It is also possible to form the slit across one adjoining pair of the weight reduction holes. In this case, the occurrence of stress concentration at both of the end portions of the slit can be suppressed, thereby making it possible to reliably prevent the brake disc from being damaged due to cracks formed in both of the end portions of the slit. Further, it is possible to easily form the slit by utilizing the weight reduction holes as starting positions of cutting the slit. Furthermore, since the deformation volume of the brake disc during braking becomes large between the weight reduction holes, it is possible to effectively prevent generation of noise by forming the slit in such a portion where the deformation volume of the brake disc becomes large.

### Advantageous Effects of Invention

According to the brake disc having reduced noise of the present invention, it is possible to effectively prevent generation of noise such as brake noise during braking by blocking or damping vibrations of the brake disc by means of the slit with a simple configuration in which the slit is formed in the slide section.

### Brief Description of the Drawings

Fig. 1 is a front view showing a conventional brake disc on which a slit is not formed.
Fig. 2(a), Fig. 2(b) and Fig. 2(c) are front views each showing a brake disc on which one slit is formed, wherein the length of the slit on each of the brake discs is different from that of the other two brake discs.
Fig. 3(a), Fig. 3(b) and Fig. 3(c) are front views each showing a brake disc on which two slits are formed, wherein the length of the two slits on each of the brake discs is different from that of the other two brake discs.
Fig. 4(a), Fig. 4(b) and Fig. 4(c) are front views each showing a brake disc on which three slits are formed, wherein the length of the three slits on each of the brake discs is different from that of the other two brake discs.
Fig. 5(a) and Fig. 5(b) are front views each showing a brake disc on which a slit whose end portion at the outer circumferential side of the brake disc is connected to a small hole is formed, wherein the length of the slit of one of the brake discs is different from that of the other brake disc.
Fig. 6 is a front view showing a brake disc on which a deformed slit is formed.
Fig. 7(a) and Fig. 7(b) are explanatory drawings each showing a method of a brake noise test.
Fig. 8 is a graph showing the relationship between the ratio of the length of the slit in the radial direction of the brake disc to the width of a slide section and the number of times of brake noise generation.

### Description of Embodiments

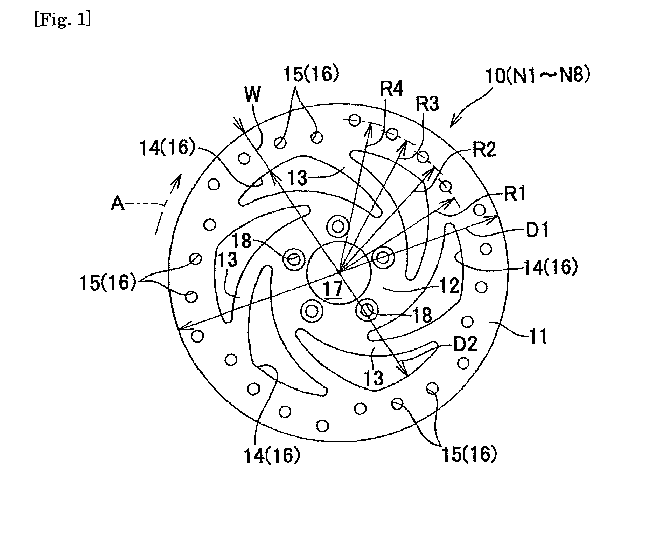

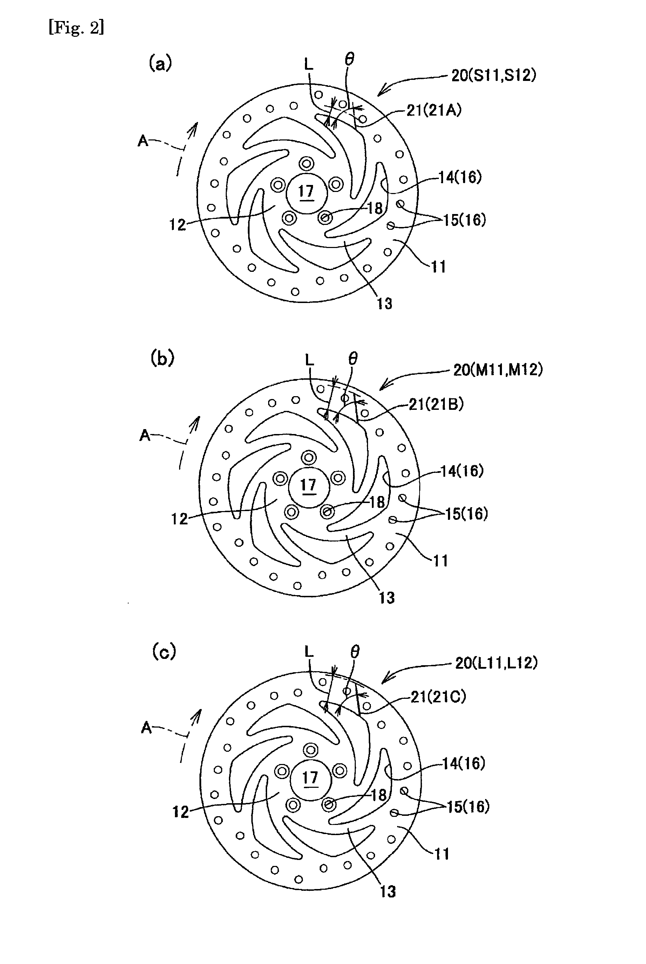

Hereinafter, embodiments of the present invention will be described with reference to the drawings.
A brake disc 10 shown in Fig. 1 is a conventional brake disc. A brake disc 20 of the present invention shown in Figs. 2 to 6 is configured in such a manner that a slit 21 is formed in a slide section 11 in such a conventional brake disc 10 so as to prevent generation of brake noise. Therefore, the basic configuration of a brake disc will be described at first with reference to the conventional brake disc 10 in Fig. 1.

As shown in Fig. 1, the brake disc 10 having reduced noise is a brake disc for a two-wheeled motor vehicle, and provided with a slide section 11 with which a brake pad (not shown) makes sliding contact, a mounting section 12 which is to be mounted to a wheel (not shown), connection sections 13 which connect the mounting section 12 and the slide section 11, a plurality of figurate holes 14 for weight reduction which are formed between the mounting section 12 and the slide section 11, and a plurality of small holes 15 for heat release and weight reduction which are formed in the slide section 11. Further, the brake disc 10 is configured so as to rotate in a direction indicated by an arrow A together with the wheel. The figurate holes 14 and the small holes 15 are equivalent to weight reduction holes 16 of the present invention.

The brake disc 10 is manufactured in such a manner that a flat metal plate made of stainless steel or carbon steel with excellent wear resistance is press molded, and the slide section 11 is then subjected to a heat treatment. The brake disc 10 shown in Fig. 1 is manufactured by press molding a stainless steel plate having a thickness of 7 mm. Further, in the brake disc 10 shown in Fig. 1, the mounting section 12, the slide section 11, and the connection sections 13 are configured so as to have substantially the same thickness. The outer diameter of the brake disc 10 can be appropriately set depending on the configuration of the two-wheeled motor vehicle. In the brake disc 10 shown in Fig. 1, the outer diameter D1 is set to 30 cm. In addition, the width W of the slide section 11 is set to be slightly wider than the width of the brake pad, thereby making it possible to reliably hold the slide section 11 with the brake pad. In the brake disc 10 shown in Fig. 1, the width W of the slide section 11 is set to 40 mm.

Although the mounting section 12 and the slide section 11 are disposed in the same plane in the brake disc 10 shown in Fig. 1, the mounting section 12 and the slide section 11 can also be respectively disposed in planes which are parallel to each other with a certain space therebetween in the thickness direction of the brake disc 10 in response to the configuration of a vehicle body.

The mounting section 12 and the slide section 11 are connected to each other through six connection sections 13 each having a gently curved arm shape. Six boomerang-shaped figurate holes 14 which are partitioned by the connection sections 13 are formed between the mounting section 12 and the slide section 11. The connection sections 13 are provided so as to be inclined in one direction with respect to the radial direction of the brake disc 10 so that one end portion of each of the connection sections 13 at the outer circumferential side of the brake disc 10 can be located at a more rearward position in the rotational direction A than the other end portion at the inner circumferential side of the brake disc 10. The shape and the number of the connection sections 13 and the figurate holes 14 can be appropriately set in view of the design of the brake disc 10. In the brake disc 10 shown in Fig. 1, six figurate holes 14 are formed at 60° intervals, and the outer diameter D2 of each of the figurate holes 14 is set to 220 mm.

The small holes 15 which are composed of round holes for heat release and weight reduction are formed in the slide section 11 in a predetermined arrangement. It is also possible to form long holes having a long slit-like shape other than the round holes, or form round holes of different diameters in a mixed manner, as the small holes 15. The diameter, the shape, the number, and the arrangement of the small holes 15 are appropriately set in view of the design of the brake disc 10 and the heat release property in the slide section 11. In the brake disc 10 shown in Fig. 1, twenty-four small holes 15 each having a diameter of 10 mm are formed in the slide section 11 at 15° intervals, and each of four adjoining holes of the small holes 15 is provided as a set. In the four small holes 15 in one set, the radii R1 to R4 from a center of the brake disc 10 are set to 123 mm, 128 mm, 133 mm and 138 mm, in this order from a front side in the rotational direction A.

In a central part of the mounting section 12, there is formed a mounting hole 17 into which an end portion of a wheel hub is inserted. Further, in a midway part of the mounting section 12 in the radial direction, there are formed five bolt insertion holes 18 for mounting the brake disc 10 to the wheel hub. The number of the bolt insertion holes 18 can be appropriately set in accordance with the number of bolt holes in the wheel hub.

Next, the configuration of the brake disc 20 of the present invention will be described with reference to Figs. 2 to 6. In this regard, the brake disc 20 of the present invention is configured in such a manner that at least one slit 21 is formed in the slide section 11 in the above-described conventional brake disc 10, and the rest of the configuration is the same as the configuration of the brake disc 10. Therefore, the same reference numerals as in the brake disc 10 denote the same components in the brake disc 20, and a detailed description thereof will be omitted.

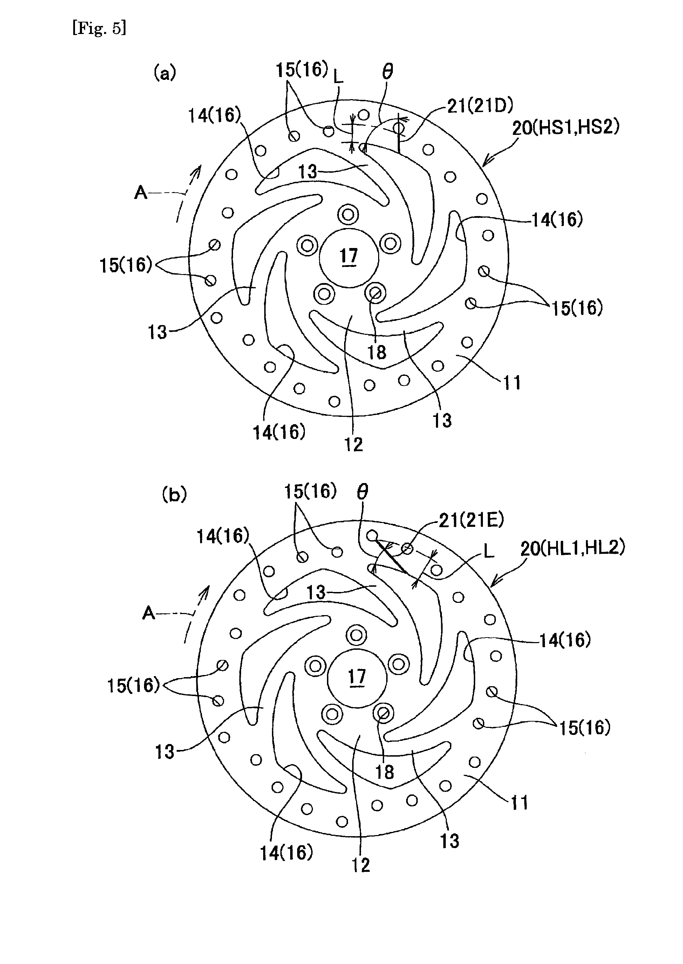

One end portion of the slit 21 at the inner circumferential side of the brake disc 20 is connected to the figurate hole 14, and the other end portion of the slit 21 at the outer circumferential side is formed up to a midway part of the slide section 11 in the radial direction. Although the end portion of the slit 21 at the outer circumferential side can be disposed within the slide section 11 as described above, it is also preferable that the end portion of the slit 21 at the outer circumferential side be connected to the small hole 15 as in the brake discs 20 shown in Figs. 5(a) and 5(b) so as to prevent occurrence of stress concentration at the end portion of the slit 21 at the outer circumferential side, thereby making it possible to prevent the brake disc 20 from being damaged due to a crack formed in the end portion of the slit 21 at the outer circumferential side. Further, the end portion of the slit 21 at the inner circumferential side can also be connected to the small hole 15 instead of the figurate hole 14, or disposed within the slide section 11.

Although the slit 21 can be formed by wire-saw, water jet, or laser processing, the slit 21 is preferably formed by press molding in view of the productivity. Further, in a case where the width of the slit 21 is too wide, the appearance of the brake disc 20 is deteriorated. Therefore, the width of the slit 21 is preferably set to 2 mm or less.

The slit 21 can also be formed in the radial direction of the brake disc 20. However, in order to prevent the brake pad from getting stuck with an end edge of the slit 21, it is preferable to form the slit 21 in such a manner that a part of the slit 21 at the outer circumferential side of the brake disc 20 in the radial direction is inclined toward a front side in the rotational direction of the brake disc 20, or toward a rear side in the rotational direction of the brake disc 20. Further, it is particularly preferable to form the slit 21 in such a manner that the part of the slit 21 at the outer circumferential side of the brake disc 20 in the radial direction is inclined toward the rear side in the rotational direction of the brake disc 20, because the stress concentration at the end portion of the slit 21 does not occur with such a configuration. In the slit 21 shown in Figs. 2 to 6, the slit 21 is formed in such a manner that the part of the slit 21 at the outer circumferential side of the brake disc 20 in the radial direction is inclined toward the rear side in the rotational direction A of the brake disc 20 at an inclination angle θ with respect to the tangential direction.

The ratio L/W of the length L of the slit 21 in the radial direction to the width W of the slide section 11 is set in the range of 50 to 95%, and preferably in the range of 60 to 90%. When the ratio L/W becomes large, the mechanical strength of the brake disc 20 is decreased. Therefore, the ratio L/W is set to 95% or less, and preferably 90% or less. On the other hand, when the ratio L/W becomes small, a sufficient noise reducing effect cannot be obtained. Therefore, the ratio L/W is set to 50% or more, and preferably 60% or more.

Next, an evaluation test for the noise reducing effect of the brake disc 20 will be described.
As shown in Figs. 2 to 6 and Table 1, twelve kinds of brake discs in which the length, the number, the inclination angle θ, and the shape of the slit 21 are changed were manufactured as the brake disc 20 of the present invention. In addition, eight brake discs having the same configuration as the configuration of the conventional brake disc 10 shown in Fig. 1 were manufactured as comparative examples.

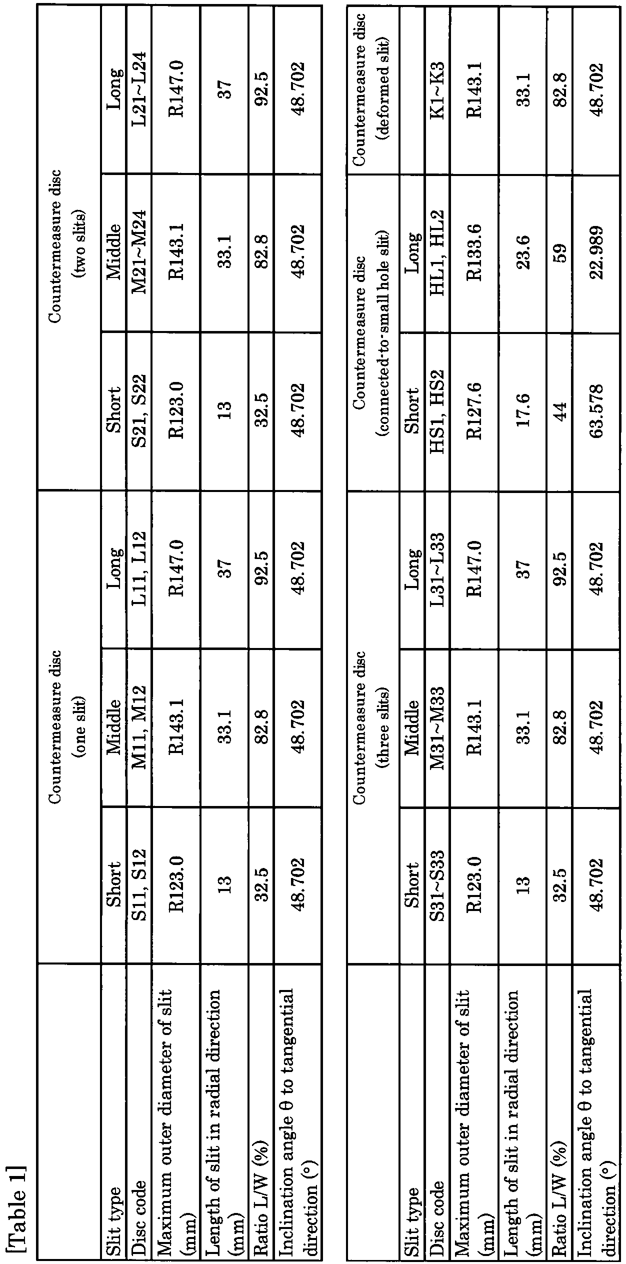

Specifically, as the brake disc 20 having one slit 21, there were manufactured two brake discs S11 and S12 on each of which one slit 21A having a length in the radial direction of 13 mm (short) and a ratio L/W of 32.5% is formed as shown in Fig. 2(a), two brake discs M11 and M12 on each of which one slit 21B having a length in the radial direction of 33.1 mm (middle) and a ratio L/W of 82.8% is formed as shown in Fig. 2(b), and two brake discs L11 and L12 on each of which one slit 21C having a length in the radial direction of 37 mm (long) and a ratio L/W of 92.5% is formed as shown in Fig. 2(c).

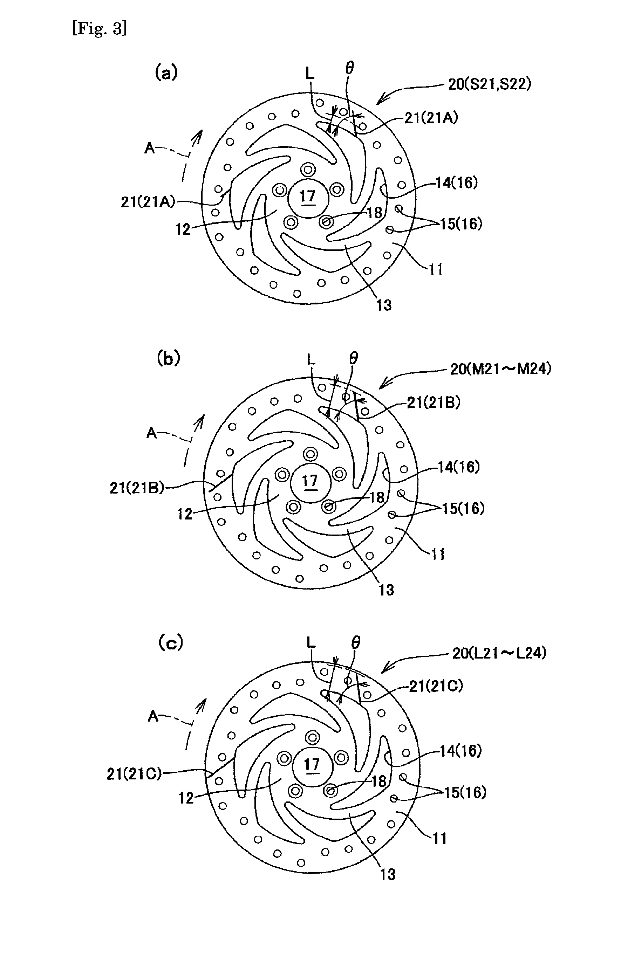

Further, as the brake disc 20 having two slits 21, there were manufactured two brake discs S21 and S22 on each of which two slits 21A each having a length in the radial direction of 13 mm (short) and a ratio L/W of 32.5% are formed with an interval of 120° therebetween as shown in Fig. 3(a), four brake discs M21 to M24 on each of which two slits 21B each having a length in the radial direction of 33.1 mm (middle) and a ratio L/W of 82.8% are formed with an interval of 120° therebetween as shown in Fig. 3(b), and four brake discs L21 to L24 on each of which two slits 21C each having a length in the radial direction of 37 mm (long) and a ratio L/W of 92.5% are formed with an interval of 120° therebetween as shown in Fig. 3(c).

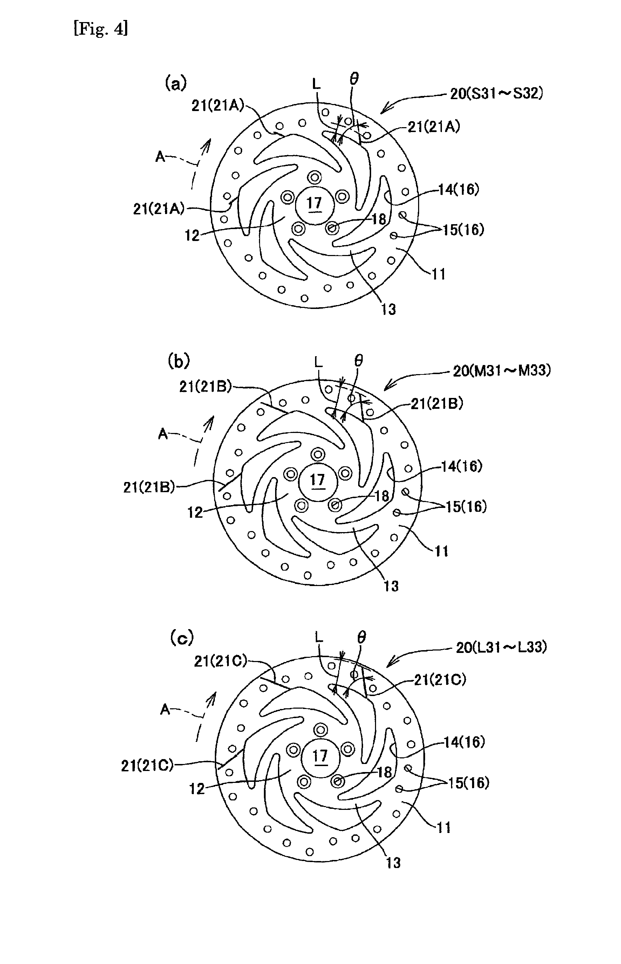

Furthermore, as the brake disc 20 having three slits 21, there were manufactured three brake discs S31 to S33 on each of which three slits 21A each having a length in the radial direction of 13 mm (short) and a ratio L/W of 32.5% are formed at intervals of 60° as shown in Fig. 4(a), three brake discs M31 to M33 on each of which three slits 21B each having a length in the radial direction of 33.1 mm (middle) and a ratio L/W of 82.8 % are formed at intervals of 60° as shown in Fig. 4(b), and three brake discs L31 to L33 on each of which three slits 21C each having a length in the radial direction of 37 mm (long) and a ratio L/W of 92.5% are formed at intervals of 60° as shown in Fig. 4(c).

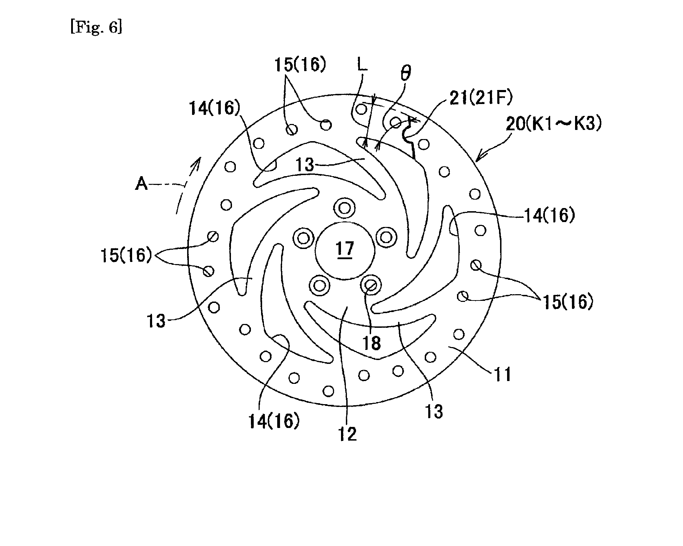

Moreover, there were manufactured two brake discs HS1 and HS2 on each of which one connected-to-small hole slit 21D which is configured in such a manner that the end portion of the slit 21 at the outer circumferential side of the brake disc 20 is connected to the small hole 15 and has a length in the radial direction of 17.6 mm (short) and a ratio L/W of 44% is formed as shown in Fig. 5(a), two brake discs HL1 and HL2 on each of which one connected-to-small hole slit 21E which is configured in such a manner that the end portion of the slit 21 at the outer circumferential side is connected to the small hole 15 and has a length in the radial direction of 23.6 mm (long) and a ratio L/W of 59% is formed, and three brake discs K1 to K3 on each of which one deformed slit 21F which is deformed so as to form a semicircle having a radius of 7 mm in a midway part thereof in the radial direction and has a length in the radial direction of 33.1 mm and a ratio L/W of 82.8% is formed as shown in Fig. 6.

Further, as for the brake disc 20 provided with two slits 21, brake discs as shown in Table 3 were manufactured, and the additional test was performed on those discs. Five kinds of brake discs A21 to A25 which are configured in the same manner as that of the brake disc 20 shown in Fig. 3(a), except that the length of the slit 21 is set to 42.5 mm, the inclination angle θ of the slit 21 with respect to the tangential direction is set to 55°, 45°, 35°, 15° and 5°, and the ratio L/W is set to 92%, 83%, 72%, 44% and 28%, were manufactured. Further, there were also manufactured a brake disc S23 which is configured in the same manner as that of the brake disc 20 shown in Fig. 3(a), except that the length of the slit 21 in the radial direction is set to 20.0 mm (short), the ratio L/W is set to 50%, and the inclination angle θ is set to 45°, and a brake disc L25 which is configured in the same manner as that of the brake disc 20 shown in Fig. 3(c), except that the length of the slit 21 in the radial direction is set to 24.0 mm (long), the ratio L/W is set to 60%, and the inclination angle θ is set to 45°.

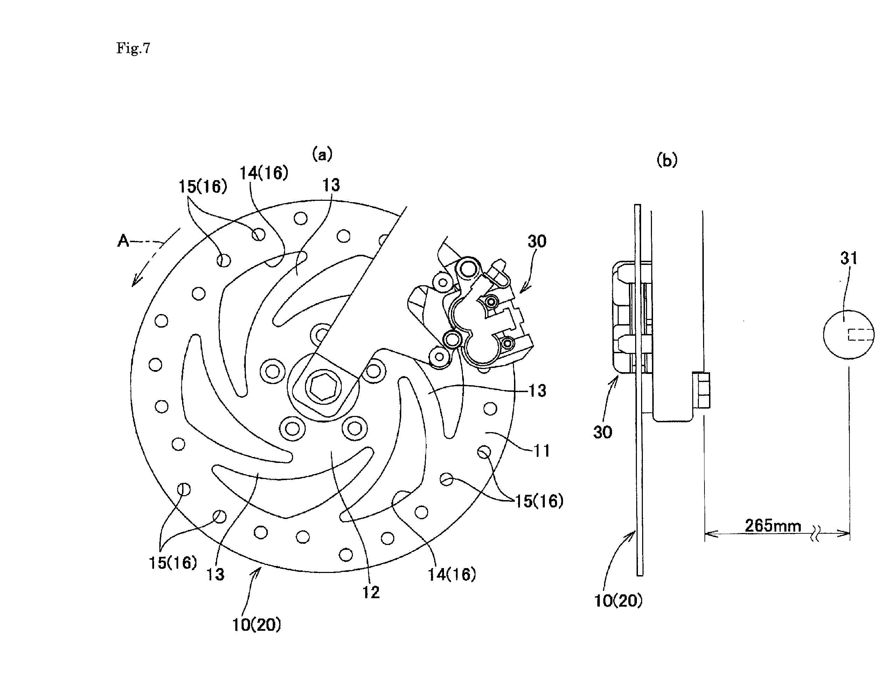

Next, as shown in Fig. 7, the brake disc 10 and the brake discs 20 were sequentially mounted to a two-wheeled motor vehicle for test, wheels of the vehicle were rotated at a running speed of 20 km/h so that inertia corresponding to the weight of the vehicle acts, the temperature of the brake pad at the time of starting the braking operation was adjusted to the preset temperature and the braking hydraulic pressure was adjusted to the preset hydraulic pressure as a braking condition, and braking force was caused to act on the brake disc. Noise generated at this moment was collected using a microphone 31 which was placed at a position 265 mm away from a brake caliper 30 in the horizontal direction to thereby measure the noise generated during braking.

As a braking condition, nine braking conditions in which the temperature of the brake pad at the time of starting the braking operation is set to three preset temperature values within the range of 150°C to 380°C and the braking hydraulic pressure is set to three preset hydraulic pressure values within the range of 0.3 MPa to 1.00 MPa were set in total. The evaluation test was carried out three times with each of the nine braking conditions. Namely, the evaluation test was carried out twenty-seven times in total with respect to one brake disc and the number of times noise generated in each of the tests was accumulated. In this regard, as for the presence or absence of noise, a sensory examiner listened to the noise obtained through the microphone 31 with his/her ears and evaluated the noise levels on a four point scale including a condition without noise (standard value: 70 dB or less), a condition in which noise can be slightly listened to (standard value: 70 to 75 dB), a condition in which noise is being generated (standard value: 75 to 90 dB), and a condition in which extremely loud noise is being generated (standard value: 90 dB or more). The total number of times the noise level was evaluated as the condition in which noise is being generated and the condition in which extremely loud noise is being generated was counted as the number of times of noise generation.

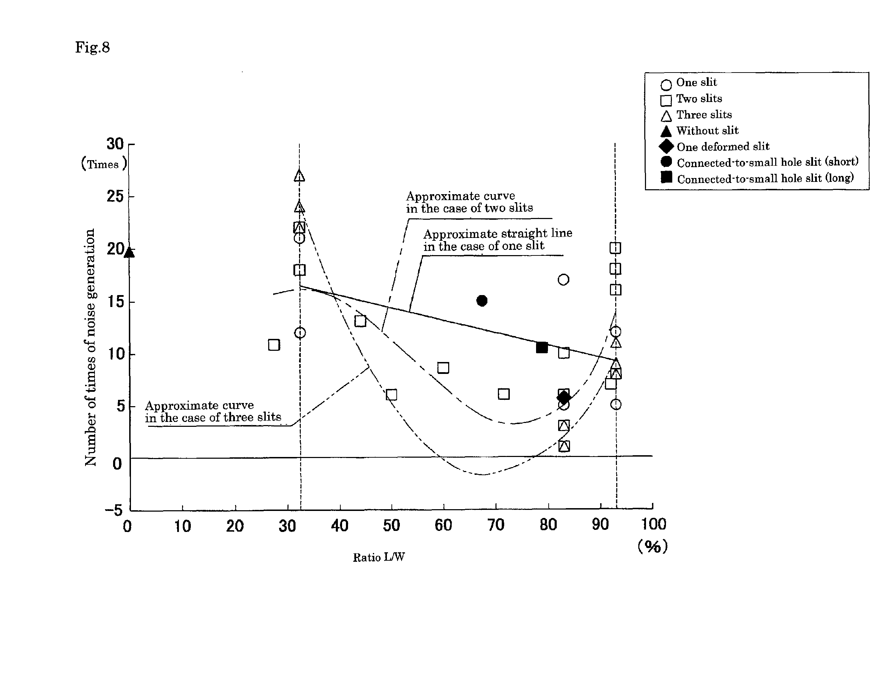

Further, the number of times of noise generation with respect to each of the brake discs on which the evaluation test was performed and the average number of times of noise generation in the brake discs of the same type are collectively listed in Table 2. In addition, the relationship between the ratio L/W of the length L of the slit 21 in the radial direction to the width W of the slide section 11 and the number of times of noise generation is shown as a graph in Fig. 8. In this regard, an approximate straight line and approximate curves in Fig.8 are calculated by the following approximate formulae, where y denotes the number of times of noise generation and x denotes the ratio L/W.
(Approximate formula in the case of one slit)
y = -12.566x + 20.697
(Approximate formula in the case of two slits)
y = 377.58x³ - 600.25x² + 270.06x - 21.129
(Approximate formula in the case of three slits)
y = 198.03x² - 272.54x + 91.991

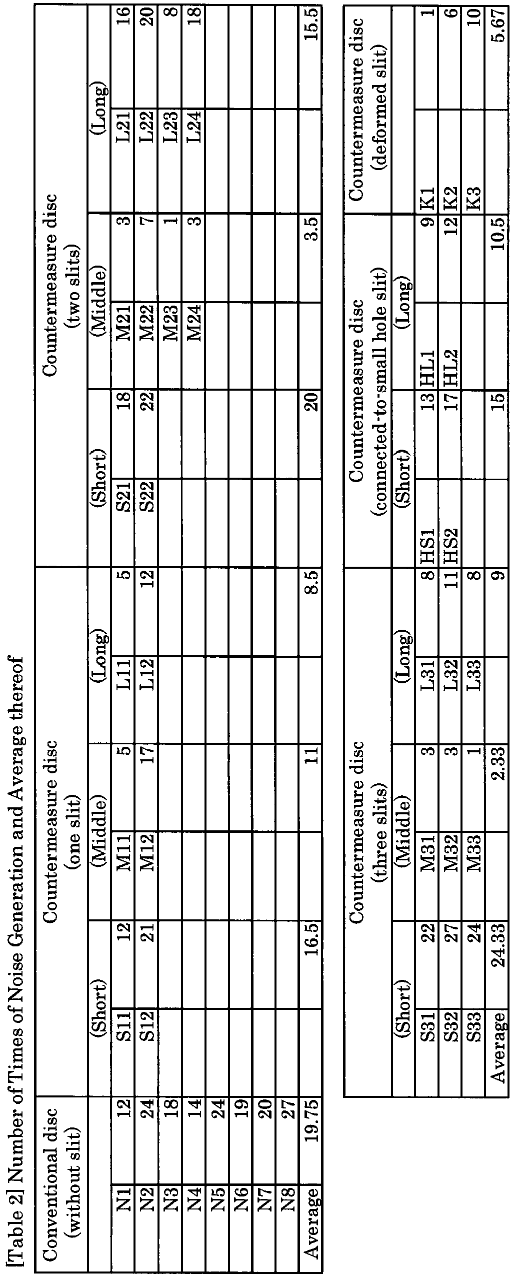

| [Table 3] | **Countermeasure disc (two slits)** | | | | | | |
|---|---|---|---|---|---|---|---|
| Disc code | A21 | A22 | A23 | A24 | A25 | S23 | L25 |
| Inclination angle θ to tangential direction (°) | 55 degrees | 45 degrees | 35 degrees | 15 degrees | 5 degrees | 45 degrees | 45 degrees |
| Number of times of noise generation | 7 | 6 | 6 | 13 | 11 | 6 | 8 |
| Length of slit in radial direction (mm) | 36.8 | 33.2 | 28.8 | 17.6 | 11.2 | 20.0 (short) | 24.0 (long) |
| Ratio L/W (%) | 92 | 83 | 72 | 44 | 28 | 50 | 60 |

It is understood from Fig. 8 that although the number of times of noise generation is decreased as the ratio L/W of the length L of the slit 21 in the radial direction to the width W of the slide section 11 becomes larger in the case where the number of slits 21 is one, the number of times of noise generation, on the other hand, is decreased as the ratio L/W becomes larger until the ratio L/W reaches 70 to 80% and then increased as the ratio L/W becomes larger in the case where the number of slits 21 is two or three. Further, it is also understood that the number of times of noise generation is basically decreased as the ratio L/W becomes larger also in the case where the connected-to-small hole slits 21D and 21F the end portion of each of which at the outer circumferential side is connected to the small hole 15 are formed, and the case where the deformed slit 21F is formed.

Accordingly, it is understood that the number of times of noise generation in the brake disc of the present invention can be made to be lower than the number of times of noise generation in the conventional brake disc 10 by setting the ratio L/W in the range of 50 to 95%, and preferably in the range of 60 to 90%. In particular, in the case where one slit 21 is formed, the number of times of noise generation can be decreased to nearly half of the number of times of noise generation in the case of the conventional brake disc 10 by setting the ratio L/W in the range of 80 to 95%. Further, in the case where two or three slits 21 are formed, the number of times of noise generation can be decreased to half or less than the number of times of noise generation in the case of the conventional brake disc 10 by setting the ratio L/W in the range of 70 to 85%. Therefore, it is understood that a sufficient noise reducing effect can be obtained. In this regard, in the case where only one slit 21 is provided, since the number of times of noise generation is decreased as the ratio L/W becomes larger, it is preferable to set the ratio L/W to 95% or more, if only the number of times of noise generation is taken into account. However, if the ratio L/W is set to be large, the mechanical strength of the brake disc 20 is decreased. Therefore, the ratio L/W is set to 95% or less, and preferably 90% or less.

In this regard, although the present invention is applied to the brake disc 20 which is provided with the slide section 11 whose outer circumferential shape is a round shape in the present embodiments, it is also possible to apply the present invention to a brake disc which is provided with the slide section 11 whose outer circumferential shape is a continuous concavo-convex shape in the radial direction in the same manner. In addition, it is also possible to apply the present invention to a floating brake disc which is configured in such a manner that the slide section 11 and the mounting section 12 are each composed of different components, and the slide section 11 and the mounting section 12 are connected by connection means composed of a pin member, a disc spring and the like.

### Reference Signs List

- 10: Brake disc
- 11: Slide section
- 12: Mounting section
- 13: Connection section
- 14: Figurate hole
- 15: Small hole
- 16: Weight reduction hole
- 17: Mounting hole
- 18: Bolt insertion hole
- 20: Brake disc
- 21: Slit
- 21A: Slit
- 21B: Slit
- 21C: Slit
- 21D: Connected-to-small hole slit
- 21E: Connected-to-small hole slit
- 21F: Deformed slit
- 30: Brake caliper
- 31: Microphone

## Claims

1. A brake disc having reduced noise, the brake disc being for a two-wheeled motor vehicle, comprising:
a mounting section to be mounted to a wheel;
a slide section for making sliding contact with a brake pad;
a connection section for connecting the mounting section and the slide section; and
a plurality of weight reduction holes for weight reduction,
wherein a slit is formed on the slide section.

2. The brake disc having reduced noise according to Claim 1, wherein a ratio L/W of the length L of the slit in a radial direction of the brake disc to the width W of the slide section is set in the range of 50 to 95%.

3. The brake disc having reduced noise according to Claim 1, wherein a ratio L/W of the length L of the slit in a radial direction of the brake disc to the width W of the slide section is set in the range of 60 to 90%.

4. The brake disc having reduced noise according to any one of Claims 1 to 3, wherein the width of the slit is set to 2 mm or less.

5. The brake disc having reduced noise according to any one of Claims 1 to 4, wherein a part of the slit at an outer circumferential side of the brake disc in the radial direction is inclined toward a rear side in a rotational direction of the brake disc.

6. The brake disc having reduced noise according to any one of Claims 1 to 5, wherein an end portion of the slit at an inner circumferential side of the brake disc is connected to one of the weight reduction holes formed at a more inner side of the brake disc than the slide section.

7. The brake disc having reduced noise according to any one of Claims 1 to 6, wherein an end portion of the slit at the outer circumferential side of the brake disc is connected to one of the weight reduction holes formed in the slide section.

8. The brake disc having reduced noise according to any one of Claims 1 to 7, wherein the slit is formed across one adjoining pair of the weight reduction holes.
